# EUROPÄISCHE PATENTANMELDUNG

(11) **EP 2 083 500 A2**
(43) Veröffentlichungstag der Anmeldung: **29.07.2009**
(21) Anmeldenummer: 09000257.7
(22) Anmeldetag: 10.01.2009
(51) Int. Cl.: H02J 13/00, H01R 13/70

(54) **Infrarot-(IR)-Fernbedienungssystem mit mindestens einem Installationsgerät und mindestens einer ferngesteuert ein-/ausschaltbaren Steckdose, an welche ein Audiogerät oder Videogerät angeschlossen ist**

(30) Priorität: 26.01.2008 DE 102008006182
(71) Anmelder: ABB AG, 68309 Mannheim (DE)
(72) Erfinder: Georgi, Dieter, Dipl.-Ing., 58313 Herdecke (DE); Schallenberg, Wolfgang, Dipl.-Ing., 40599 Düsseldorf (DE); Wieske, Stefan, Dipl.-Ing., 58285 Gevelsberg (DE); Zapp, Robert, Dipl-.Ing., 58579 Schalksmühle (DE); Schramm, Peter, Dr.-Ing., 44265 Dortmund (DE)

(57) **Zusammenfassung**

Es wird ein Infrarot-(IR)-Fernbedienungssystem mit mindestens einem Installationsgerät (1, 35, 43 + 47) und mindestens einer ferngesteuert ein-/ausschaltbaren Steckdose (16 + 17 + 18 + 19; 23 + 24 + 25 + 26) vorgeschlagen, an welche ein per IR-Signal ansteuerbares Audiogerät (20) oder Videogerät (27) angeschlossen ist, wobei das Installationsgerät (1, 25, 43 + 47) außer einer Controllereinheit (2, 36) und einer mit dieser Controllereinheit kommunizierenden Speichereinheit (3, 37) einen IR-Sender (9, 40, 49) aufweist, wobei nach Ansteuerung mittels einer Bedieneinheit (4, 38, 51) zunächst per abgespeichertem und abgerufenem erstem Signal eine gewünschte ein-/ausschaltbare Steckdose (16 + 17 + 18 + 19; 23 + 24 + 25 + 26) ferngesteuert eingeschaltet und anschließend per abgespeichertem und abgerufenem zweitem Signal via Infrarotstrahlung das an diese Steckdose angeschlossene Audiogerät (20) oder Videogerät (27) in gewünschter, abgespeicherter Weise aktiviert wird.

## Beschreibung

Die Erfindung betrifft ein Infrarot-(IR)-Fernbedienungssystem mit mindestens einem Installationsgerät und mindestens einer ferngesteuert ein-/ausschaltbaren Steckdose, an welche ein Audiogerät oder Videogerät angeschlossen ist.

Allgemein sind Infrarot-(IR)-Fernbedienungen zur Steuerung von Audiogeräten (Radiogeräten) und Videogeräten (z. B. Fernsehgeräten) bekannt. Um diese Geräte per IR bedienen zu können, müssen sie jedoch in ständiger Bereitschaft stehen, was über eine sogenannte Standby-Schaltung erfolgt. In dieser Betriebsart wird kontinuierlich Energie aus dem Versorgungsnetz entnommen. Um Standby-Energie zu reduzieren, können Audiogeräte und Videogeräte über eine schaltbare Steckdose angeschlossen werden, welche bei Nichtgebrauch abgeschaltet wird. Dies führt jedoch dazu, dass diese Geräte nicht mehr per IR-Signal eingeschaltet werden können, ohne vorab die Steckdosenleiste manuell einzuschalten und stellt somit eine deutliche Komfortreduzierung dar.

Im der Gira-Druckschrift Best.-Nr. 1815 10 04/06 5.16 ist es beschrieben, Musik vorhandener HiFi-Komponenten im ganzen Gebäude zu verteilen und von jedem beliebigen Raum aus über ein KNX/EIB System zu steuern. Innerhalb des EIB Audio-Systems erfolgt die Steuerung der HiFi-Komponenten über Tastsensoren und IR-Umsetzer. Der IR-Umsetzer wandelt die Steuerbefehle eines Tastsensors in zuvor eingelernte Infrarot-Signale um und sendet sie an den IR-Empfänger der HiFi-Anlage Systems erfolgt die Steuerung der HiFi-Komponenten über Tastsensoren und IR-Umsetzer. Der IR-Umsetzer wandelt die Steuerbefehle eines Tastsensors in zuvor eingelernte Infrarot-Signale um und sendet sie an den IR-Empfänger der HiFi-Anlage oder des Fernsehgeräts. Damit können zusätzliche Funktionen, wie z. B. "Vor" oder "Zurück" von CD-Titeln, Wahl von Radiosendern oder eine Stummschaltung angewählt werden.

Der Erfindung liegt die Aufgabe zugrunde, ein optimiertes, den Komfort keinesfalls reduzierendes Infrarot-(IR)-Fernbedienungssystem für Audiogeräte oder Videogeräte anzugeben.

Die Aufgabe wird erfindungsgemäß gelöst durch ein Infrarot-(IR)-Fernbedienungssystem mit mindestens einem Installationsgerät und mindestens einer ferngesteuert ein-/ausschaltbaren Steckdose, an welche ein per IR-Signal ansteuerbares Audiogerät oder Videogerät angeschlossen ist, wobei das Installationsgerät außer einer Controllereinheit und einer mit dieser Controllereinheit kommunizierenden Speichereinheit einen IR-Sender aufweist, wobei nach Ansteuerung mittels einer Bedieneinheit zunächst per abgespeichertem und abgerufenem erstem Signal eine gewünschte ein-/ausschaltbare Steckdose ferngesteuert eingeschaltet und anschließend per abgespeichertem und abgerufenem zweitem Signal via Infrarotstrahlung das an diese Steckdose angeschlossene Audiogerät oder Videogerät in gewünschter, abgespeicherter Weise aktiviert wird.

Das erste Signal kann dabei ein IR-Signal sein, welches eine gewünschte, per IR-Signal ein-/ausschaltbare Steckdose ansteuert. Das erste Signal kann alternativ über ein Bussystem der ein-/ausschaltbaren Steckdose übermittelt werden.

Das Einschalten / Ausschalten der ferngesteuert schaltbaren Steckdose inklusive des daran angeschlossenen Audiogeräts oder Videogeräts erfolgt wahlweise entweder durch Betätigung einer Bedieneinheit des Installationsgeräts oder durch Aktivierung des IR-Signals einer IR-Hand-Fernbedienung des Audiogeräts oder Videogeräts, d. h. dieses IR-Signal aktiviert dann nicht nur das Audiogerät oder Videogerät, sondern auch diejenige Steckdose, an welche das Audiogerät / Videogerät angeschlossen ist.

Die mit der Erfindung erzielbaren Vorteile liegen insbesondere darin, dass Standby-Energie von Audiogeräten oder Videogeräten eingespart wird, ohne dass dies auf Kosten des Komforts geschieht. Im Gegenteil, die Bedienung von Audiogeräten oder Videogeräten wird erleichtert, denn es ist quasi durch einen einzigen Knopfdruck respektive Tastdruck oder eine einzige Touchscreen-Berührung möglich, mindestens einen gewünschten vorgegebenen und abgespeicherten TV-Sender oder Radio-Sender einzuschalten. Dies kann ohne jede Nutzung der Hand-Fernbedienung des Audiogerätes oder Videogerätes erfolgen. Dabei kann das Installationsgerät gleichzeitig seine Funktion als Lichtschalter oder Jalousieschalter beibehalten, d. h. ein üblicher Lichtschalter oder Jalousieschalter kann durch das erfindungsgemäß vorgeschlagene Installationsgerät ersetzt werden, welches neben der Funktionen "Licht schalten" oder "Jalousie ansteuern" alle Komponenten für das Einschalten / Ausschalten eines Audiogerätes oder Videogerätes enthält. Da zur Realisierung dieser neuen Funktionalität keinerlei neue Leitungen zu verlegen sind und auch keine neuen Unterputzdosen erforderlich sind, reduzieren sich die erforderlichen Montagekosten / Installationskosten erheblich.

Vorteilhafte Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: eine erste Ausführungsform eines Infrarot-(IR)-Fernbedienungssystems mit einem in einer Unterputzdose montierbarem UP-Installationsgerät,
- Fig. 2: eine zweite Ausführungsform eines lnfrarot-(IR)-Fernbedienungssystems mit einem Controlpanel als Installationsgerät,
- Fig. 3: eine dritte Ausführungsform eines Infrarot-(IR)-Fernbedienungssystems, welche sowohl ein in einer Unterputzdose montierbares UP-Installationsgerät als auch ein Controlpanel aufweist,
- Fig. 4: eine Frontansicht auf ein für die erste Ausführungsform geeignetes UP-Installationsgerät,
- Fig. 5: eine Alternative zur dritten Ausführungsform.

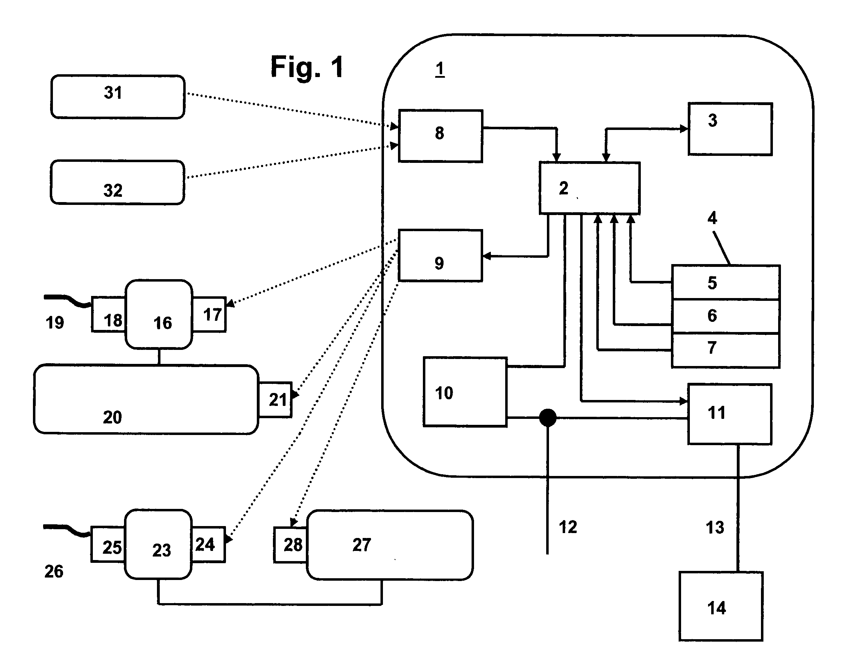

In Fig. 1 ist eine erste Ausführungsform eines Infrarot-(IR)-Fernbedienungssystems mit einem Unterputz-(UP)-Installationsgerät 1 gezeigt, welches mit seinem Sockel in einer Standard-Unterputzdose montierbar ist wobei das UP-Installationsgerät 1 insbesondere folgende Baukomponenten enthält:
- eine Controllereinheit 2,
- eine mit der Controllereinheit 2 bidirektional kommunizierende Speichereinheit 3,
- eine Bedieneinheit 4 (Mehrfach-Bedienelement) mit beispielsweise drei Betätigungstasten 5, 6, 7 (selbstverständlich können auch mehr oder weniger Betätigungstasten vorgesehen sein), welche die Controllereinheit 2 ansteuern,
- einen IR-Empfänger 8, welcher eingangsseitig drahtlos IR-Signale - hier beispielsweise IR-Signale von mobilen IR-Hand-Fernbedienungen 31, 32 (und gegebenenfalls weiteren Hand-Fernbedienungen) von AudiogerätenNideogeräten - empfängt und ausgangsseitig die Controllereinheit 2 entsprechend beaufschlagt,
- einen IR-Sender 9, welcher eingangsseitig Signale der Controllereinheit 2 empfängt und ausgangsseitig erste und zweite IR-Signale an IR-Empfänger - hier beispielsweise vier IR-Empfänger 17, 21, 24 und 28 - abgibt,
- eine Stromversorgungseinheit 10 (Netzteil) für die Energieversorgung aller elektrischen/elektronischen Baukomponenten des UP-Installationsgeräts 1, welche eingangsseitig über ein Netz-Anschlusskabel 12 mit einem Wechselspannungsnetz verbunden ist,
- mindestens einen Aktor 11, welcher eingangsseitig mit dem Netz-Anschlusskabel 12 verbunden ist, welcher von der Controllereinheit 2 angesteuert wird und welcher ausgangsseitig über ein Last-Anschlusskabel 13 mit einer Last 14 verbunden ist.

Vorteilhaft bei dieser ersten Ausführungsform ist insbesondere, dass das UP-Installationsgerät 1 an Stelle eines herkömmlichen Lichtschalters oder Jalousieschalters montiert werden kann, d. h. die Funktion eines herkömmlichen Lichtschalters oder Jalousieschalters wird beibehalten und mit der vorstehend erläuterten zusätzlichen Funktionalität ergänzt. Als Last 14 kommen z. B. Jalousiemotoren oder Beleuchtungseinrichtungen in Frage. Als Aktor 11 dient z. B. ein Relais zur Beaufschlagung eines Jalousiemotors oder ein Dimmer zur Versorgung einer Beleuchtungseinrichtung.

Als fernsteuerbares Gerät ist z. B. ein Audiogerät 20 vorgesehen, welches über den erwähnten IR-Empfänger 21 ansteuerbar ist und welches an eine Steckdose 16 angeschlossen ist, welche über einen Schaltaktor 18 mit einem Netz-Anschlusskabel 19 verbunden ist. Die erwähnte IR-Hand-Fernbedienung 31 ist dabei diesem Audiogerät 20 zugeordnet, d. h. bei entsprechender Betätigung der Hand-Fernbedienung 31 wird via IR-Empfänger 8 - Controllereinheit 2 - IR-Sender 9 - IR-Empfänger 17 mittels eines ersten IR-Signals zunächst die Steckdose 16 eingeschaltet und an Spannung gelegt und anschließend wird via IR-Sender 9 und IR-Empfänger 21 mittels eines zweiten IR-Signals das Audiogerät 20 eingeschaltet.

Als weiteres fernsteuerbares Gerät ist z. B. ein Videogerät 27 vorgesehen, welches über den erwähnten IR-Empfänger 28 ansteuerbar ist und welches an eine Steckdose 23 angeschlossen ist, welche über einen Schaltaktor 25 mit einem Netz-Anschlusskabel 26 verbunden ist. Die erwähnte IR-Hand-Fernbedienung 32 ist dabei dem Videogerät 27 zugeordnet, d. h. bei entsprechender Betätigung der Hand-Fernbedienung 32 wird via IR-Empfänger 8 - Controllereinheit 2 - IR-Sender 9 - IR-Empfänger 24 mittels eines ersten IR-Signals zunächst die Steckdose 23 eingeschaltet und an Spannung gelegt und anschließend wird via IR-Sender 9 und IR-Empfänger 28 mittels eines zweiten IR-Signals das Videogerät 27 eingeschaltet.

Die Konfigurationen 16 + 17 + 18 + 19 und 23 + 24 + 25 + 26 werden nachfolgend als per IR-Signal ein-/ausschaltbare Steckdosen oder kurz auch als Infrarot-Steckdosen bezeichnet.

Alternativ zur Hand-Fernbedienung mittel Infrarotsignalen lassen sich sowohl das Audiogerät 20 als auch das Videogerät 27 durch Betätigung der entsprechenden Betätigungstaste 5 - 8 der Bedieneinheit 4 sowohl einschalten als auch ausschalten.

Nach abgeschlossener Inbetriebnahmephase muss vom Nutzer nur noch eine der Betätigungstasten 5, 6, 7 des UP-Installationsgeräts gedrückt werden, worauf im UP-Installationsgerät 1 eine Sequenz von IR-Signalen generiert wird, um zunächst mittels erstem IR-Signal die betroffene Infrarot-Steckdose einzuschalten und um anschließend mittels zweitem IR-Signal das gewünschte Gerät (Audiogerät, Videogerät) in vorgegebener Weise zu aktivieren. Zwischen diesen beiden Befehlen respektive IR-Signalen wird sinnvoll eine kurze Zeitspanne berücksichtigt, um das Gerät zunächst in Empfangsbereitschaft zu bringen. Die unterschiedlichen Betätigungstasten 5, 6, 7 können während der Inbetriebnahmephase in gewünschter Weise sowohl mit unterschiedlichen Geräten (Audiogerät, Videogerät) als auch mit vordefinierten Senderstationen belegt werden.

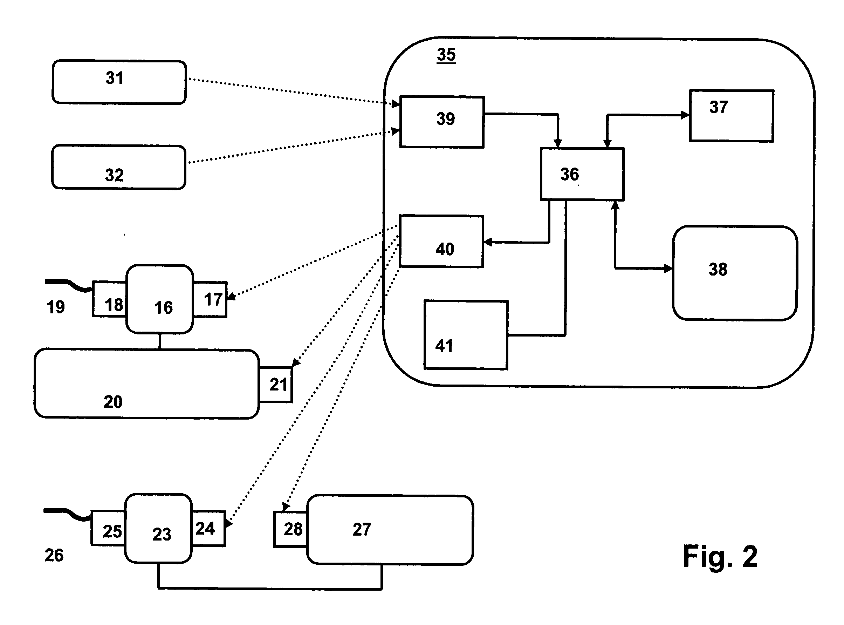

In Fig. 2 ist eine zweite Ausführungsform eines Infrarot-(IR)-Fernbedienungssystems mit einem Controlpanel 35 als Installationsgerät gezeigt, wobei das Controlpanel insbesondere folgende Baukomponenten enthält:
- eine Controllereinheit 36,
- eine mit der Controllereinheit 36 bidirektional kommunizierende Speichereinheit 37,
- ein Touchscreen 38 als Bedieneinheit, welches unter Anderem mehrere Betätigungstasten abbildet, um derart die Controllereinheit 36 in gewünschter Weise ansteuern zu können,
- einen IR-Empfänger 39, welcher eingangsseitig drahtlos IR-Signale - hier beispielsweise IR-Signale von mobilen IR-Hand-Fernbedienungen 31, 32 (und gegebenenfalls weiteren Hand-Fernbedienungen) - empfängt und ausgangsseitig die Controllereinheit 36 entsprechend beaufschlagt,
- einen IR-Sender 40, welcher eingangsseitig Signale der Controllereinheit 36 empfängt und ausgangsseitig IR-Signale an IR-Empfänger- hier beispielsweise vier IR-Empfänger 17, 21, 24 und 28 - abgibt,
- eine Stromversorgungseinheit 41 für die Energieversorgung aller elektrischen/elektronischen Baukomponenten des Controlpanels 35, wobei die Stromversorgung z. B. über ein Wechselspannungsnetz oder alternativ über ein Bussystem erfolgen kann, an welches das Controlpanel 35 angeschlossen ist.

Die weitere Konfiguration mit Audiogerät 20, Steckdose 16, Schaltaktor 18 sowie Videogerät 27, Steckdose 23, Schaltaktor 25 ist wie unter Fig. 1 erläutert.

Der Vorteil der zweiten Ausführungsform gemäß Fig. 2 mit Controlpanel 35 an Stelle des UP-Installationsgeräts 1 ist insbesondere darin begründet, dass auf der Oberfläche des Touchscreen 38 in übersichtlicher Art und Weise eine Vielzahl von Bedienfunktionen für die zu steuernden Geräte (Audiogerät, Videogerät) dargestellt werden kann.

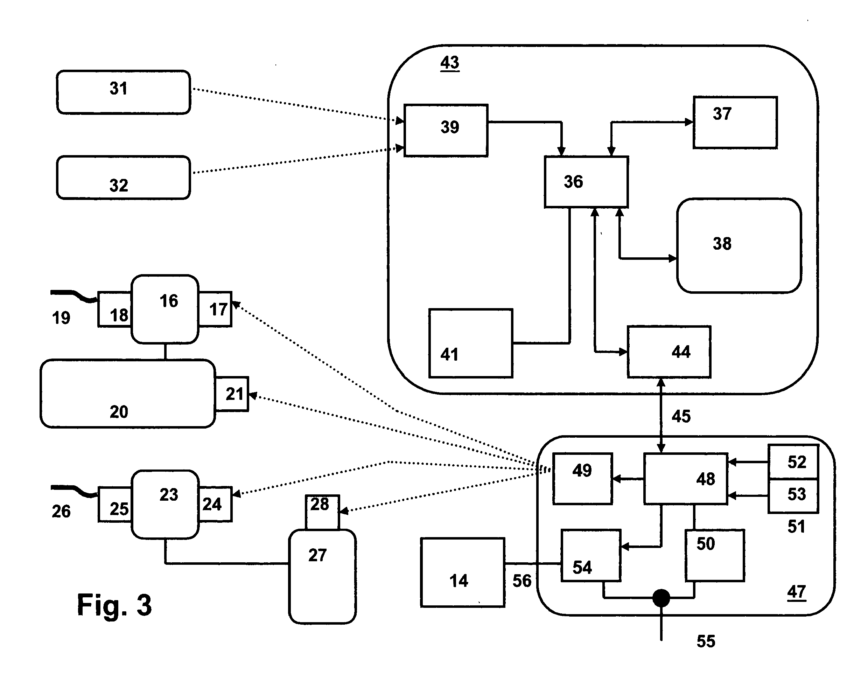

In Fig. 3 ist eine dritte Ausführungsform eines Infrarot-(IR)-Fernbedienungssystems gezeigt, bei welcher die erste und die zweite Ausführungsform miteinander kombiniert sind, wobei sowohl einerseits ein Controlpanel 43 als andererseits auch ein in eine Standard-Unterputzdose montierbares UP-Installationsgerät 47 vorgesehen sind. Das Controlpanel 43 enthält insbesondere folgende Baukomponenten:
- eine Controllereinheit 36,
- eine mit der Controllereinheit 36 bidirektional kommunizierende Speichereinheit 37,
- ein mit der Controllereinheit 36 bidirektional kommunizierendes Touchscreen 38 als Bedieneinheit,
- einen IR-Empfänger 39, welcher eingangsseitig drahtlos IR-Signale - hier beispielsweise IR-Signale von mobilen IR-Hand-Fernbedienungen 31, 32 (und gegebenenfalls weiteren Hand-Fernbedienungen) - empfängt und ausgangsseitig die Controllereinheit 36 entsprechend beaufschlagt,
- eine an die Controllereinheit 36 angeschlossene Buseinheit 44,
- eine Stromversorgungseinheit 41 für die Energieversorgung aller elektrischen/elektronischen Baukomponenten des Controlpanels 43.

Das UP-Installationsgerät 47 enthält:
- eine Buseinheit 48, welche über ein Bussystem 45 an die Buseinheit 44 des Controlpanels 43 angeschlossen ist,
- eine Bedieneinheit 51 mit beispielsweise zwei Betätigungstasten 52, 53 (selbstverständlich können auch mehr oder weniger Betätigungstasten vorgesehen sein), welche die Buseinheit 48 beaufschlagen,
- einen IR-Sender 49, welcher eingangsseitig Signale der Buseinheit 48 empfängt und ausgangsseitig IR-Signale an IR-Empfänger - hier beispielsweise vier IR-Empfänger 17, 21, 24 und 28 - abgibt,
- eine Stromversorgungseinheit 50 für die Energieversorgung aller elektrischen/elektronischen Baukomponenten des UP-Installationsgeräts 47, welche eingangsseitig über ein Netz-Anschlusskabel 55 mit einem Wechselspannungsnetz verbunden ist,
- mindestens einen Aktor 54, welcher eingangsseitig mit dem Netz-Anschlusskabel 55 verbunden ist, welcher von der Buseinheit 48 angesteuert wird und welcher ausgangsseitig über ein Last-Anschlusskabel 56 mit einer Last 14 verbunden ist.

Die weitere Konfiguration mit Audiogerät 20, Steckdose 16, Schaltaktor 18 sowie Videogerät 27, Steckdose 23 und Schaltaktor 25 ist wie unter Fig. 1 erläutert. Die Ausführungen gemäß Fig. 1 zur Last und zum Aktor sind auch bei der Ausführungsform gemäß Fig. 3 zutreffend.

Diese dritte Ausführungsform gemäß Fig. 3 beruht auf beiden Ausführungsformen gemäß Fig. 1 und 2, jedoch erfolgt die Aussendung des IR-Signals von einem UP-Installationsgerät 47, welches mit dem Controlpanel 43 über das Bussystem 45 verbunden ist, was bedeutet, dass das über eine Hand-Fernbedienung 31, 32 per IR-Signal angesteuerte Controlpanel 43 und das IR-Signale aussendende UP-Installationsgerät 47 auch in unterschiedlichen Räumen eines Gebäudes angeordnet sein können. In gleicher Weise ist es möglich, dass das Controlpanel 43 nicht lediglich ein einziges UP-Installationsgerät 47 über das Bussystem 45 ansteuert, sondern mehrere Installationsgeräte, welche an dieses Bussystem 45 angeschlossen sind und welche sich in unterschiedlichen Räumen eines Gebäudes befinden können.

Hierdurch werden nicht nur IR-Signale über das Bussystem weitergeleitet, sondern es erfolgt zudem die Bedienung eines Audiogerätes / Videogerätes über die Buseinheiten und das Bussystem in vorab festgelegter und abgespeicherter Art und Weise.

In weiterer Ausgestaltung ist es möglich, diese IR-Signale als Bestandteil einer Szene im Bereich der Gebäudesystemtechnik zu integrieren. Ein Beispiel für eine derartige Szene ist, dass beim Berühren eines bestimmten Touchbuttons "Fernsehgerät mit Sender ARD einschalten" im Touchscreen 38 des Controlpanels 43 automatisch die folgende Telegrammsequenz gestartet wird:
- Einschalten der Infrarot-Steckdose 23 + 24 + 25 + 26 für das Videogerät (hier Fernsehgerät) mittels eines ersten IR-Signals.
- Einschalten des Deckenlichtes mit einem gedimmten Wert von 50%.
- Herunterfahren der Jalousie.
- Einschalten des Fernsehgeräts mit Stationstaste "ARD" mittels eines zweiten IR-Signals.
Für eine derartige Szene ist es vorteilhaft nicht notwendig, die separaten Hand-Fernbedienungen für das Deckenlicht, das Fernsehgerät und den Sat-Empfänger heranzuziehen und entsprechend zu bedienen.

Bei einem Bussystem (z. B. Powerline mit Ansteuerung von Gebäudekomponenten, wie Beleuchtung, Jalousien usw. über das 230V-Netz) mit über das Bussystem ansteuerbaren (ein-/ausschaltbaren) Steckdosen können auch diese Steckdosen an Stelle der vorstehend erwähnten Infrarot-Steckdosen herangezogen werden. Das erste Signal ist dann kein IR-Signal, sondern ein via Bussystem übermitteltes Signal. Diese Ausführungsart hat den Vorteil, dass auch verdeckt hinter den Audio/Videogeräten angeordnete schaltbare Steckdosen sicher erreicht werden.

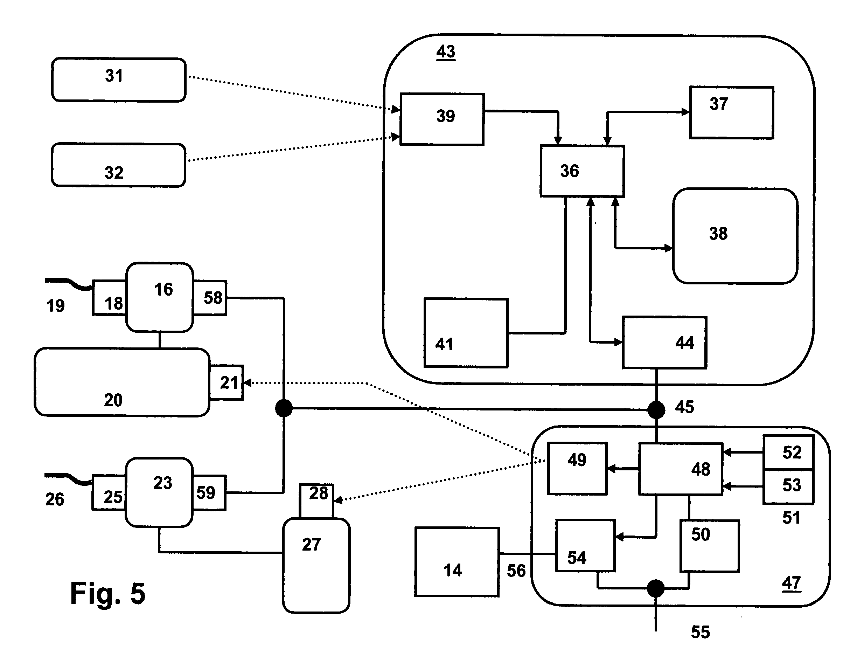

Fig. 5 zeigt eine derartige Konfiguration als Alternative zur dritten Ausführungsform. An Stelle von IR-Empfängern 17, 24 sind Buseinheiten 58, 59 vorgesehen, welche an das Bussystem 45 angeschlossen sind und die Steckdosen 16, 23 ansteuern. Die übrige Anordnung ist wie unter Fig. 3 erläutert.

Die Inbetriebnahme erfolgt für alle Ausführungsformen z. B. gemäß dem folgenden Verfahren:
1. Das UP-Installationsgerät 1 bzw. das Controlpanel 35, 43 werden über eine festgelegte Tastenkombination oder Passworteingabe in den "Lernmode" respektive "Anlernvorgang" gesetzt.
2. Es werden sukzessive zunächst eine Betätigungstaste 5, 6, 7 des UP-Installationsgeräts 1 gedrückt bzw. ein Tochbutton des Controlpanels 35, 43 berührt, worauf unmittelbar darauffolgend die hierzu korrespondierende Taste auf der relevanten Hand-Fernbedienung 31, 32 gedrückt wird, um Gerät (Audiogerät oder Videogerät) und gewünschten Sender einzuspeichern.
3. Zum Anlernen einer Sequenz wird die Betätigungstaste 5, 6, 7 des UP-Installationsgeräts 1 erneut gedrückt bzw. ein Tochbutton des Controlpanels 35, 43 erneut berührt und danach die entsprechenden Tasten auf den Hand-Fernbedienungen.
4. Der "Anlernvorgang" wird abgeschlossen durch vordefinierte Tastenkombination am UP-Installationsgerät 1 bzw. Controlpanel 35.

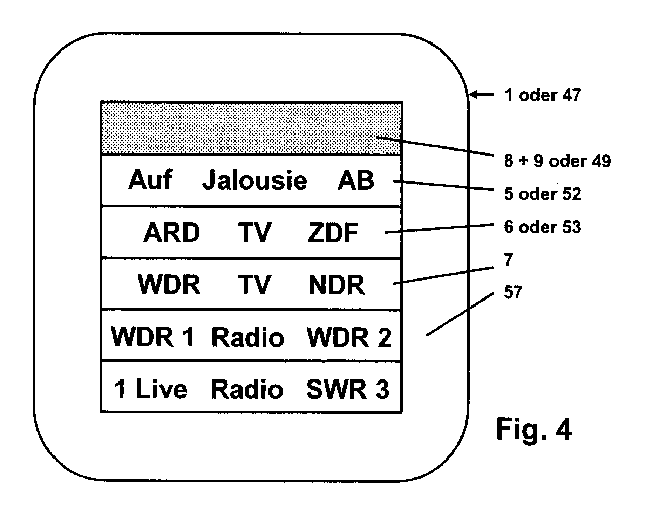

In Fig. 4 ist eine Frontansicht auf ein für die erste und die dritte Ausführungsform geeignetes UP-Installationsgerät dargestellt. Es ist der Abdeckrahmen 57 des UP-Installationsgeräts 1 oder 47 zu erkennen, innerhalb dessen ein Einsatz angeordnet ist, welcher fünf jeweils rechteckförmig ausgebildete Betätigungstasten - hier lediglich beispielhaft mit den Ziffern 5, 6, 7, 52, 53 bezeichnet- und ein für IR-Strahlung durchlässiges Abdeckfeld aufweist, hinter welchem ein IR-Empfänger 8 und/oder IR-Sender 9 oder 49 angeordnet sind. Die einzelnen Betätigungstasten sind jeweils mit Beschriftungen versehen, welche die mit der einzelnen Betätigungstaste verbundene Funktion bezeichnen, z. B. "Jalousie Auf", "Jalousie Ab", "ARD", "ZDF", "WDR 1" usw. Da jede der fünf Betätigungstasten wippenartig beidseitig beaufschlagbar ist, sind mittels des gezeigten UP-Installationsgeräts zehn unterschiedliche Funktionen aktivierbar, hier zwei Funktionen betreffend die Jalousie-Ansteuerung, vier Funktionen betreffend das Einschalten / Ausschalten von vier unterschiedlichen TV-Programmen und vier Funktionen betreffend das Einschalten / Ausschalten von vier unterschiedlichen Radio-Stationen. Das Einschalten eines gewünschten TV-Programms oder eines gewünschten Radio-Programms erfolgt durch Druck auf die relevante Betätigungstaste. Werden ein anderes TV-Programm oder ein anderes Radio-Programm gewünscht, wird die entsprechende Betätigungstaste gedrückt, wodurch automatisch eine Umschaltung auf das zuletzt gewünschte Programm erfolgt. Soll ein aktiviertes Programm ausgeschaltet werden, wird die entsprechende Betätigungstaste nochmals gedrückt.

### Bezugszeichenliste

| | | | |
|---|---|---|---|
| 1 | UP-Installationsgerät | 31 | IR-Hand-Fernbedienung |
| 2 | Controllereinheit | 32 | IR-Hand-Fernbedienung |
| 3 | Speichereinheit | 33 | -- |
| 4 | Bedieneinheit | 34 | -- |
| 5 | Betätigungstaste | 35 | Controlpanel |
| 6 | Betätigungstaste | 36 | Controllereinheit |
| 7 | Betätigungstaste | 37 | Speichereinheit |
| 8 | IR-Empfänger | 38 | Touchscreen |
| 9 | IR-Sender | 39 | IR-Empfänger |
| 10 | Stromversorgungseinheit | 40 | IR-Sender |
| 11 | Aktor (Relais, Dimmer) | 41 | Stromversorgungseinheit |
| 12 | Netz-Anschlusskabel | 42 | --- |
| 13 | Last-Anschlusskabel | 43 | Controlpanel |
| 14 | Last | 44 | Buseinheit |
| 15 | --- | 45 | Bussystem |
| 16 | Steckdose | 46 | --- |
| 17 | IR-Empfänger | 47 | UP-Installationsgerät |
| 18 | Schaltaktor | 48 | Buseinheit |
| 19 | Netz-Anschlusskabel | 49 | IR-Sender |
| 20 | Audiogerät | 50 | Stromversorgungseinheit |
| 21 | IR-Empfänger | 51 | Bedieneinheit |
| 22 | --- | 52 | Betätigungstaste |
| 23 | Steckdose | 53 | Betätigungstaste |
| 24 | IR-Empfänger | 54 | Aktor (Relais, Dimmer) |
| 25 | Schaltaktor | 55 | Netz-Anschlusskabel |
| 26 | Netz-Anschlusskabel | 56 | Last-Anschlusskabel |
| 27 | Videogerät | 57 | Abdeckrahmen |
| 28 | IR-Empfänger | 58 | Buseinheit |
| 29 | --- | 59 | Buseinheit |
| 30 | --- | | |

## Patentansprüche

1. Infrarot-(IR)-Fernbedienungssystem mit mindestens einem Installationsgerät (1, 35, 43 + 47) und mindestens einer ferngesteuert ein-/ausschaltbaren Steckdose (16 + 17 + 18 + 19; 23 + 24 + 25 + 26), an welche ein per IR-Signal ansteuerbares Audiogerät (20) oder Videogerät (27) angeschlossen ist, wobei das Installationsgerät (1, 25, 43 + 47) außer einer Controllereinheit (2, 36) und einer mit dieser Controllereinheit kommunizierenden Speichereinheit (3, 37) einen IR-Sender (9, 40, 49) aufweist, wobei nach Ansteuerung mittels einer Bedieneinheit (4, 38, 51) zunächst per abgespeichertem und abgerufenem erstem Signal eine gewünschte ein-/ausschaltbare Steckdose (16 + 17 + 18 + 19; 23 + 24 + 25 + 26) ferngesteuert eingeschaltet und anschließend per abgespeichertem und abgerufenem zweitem Signal via Infrarotstrahlung das an diese Steckdose angeschlossene Audiogerät (20) oder Videogerät (27) in gewünschter, abgespeicherter Weise aktiviert wird.

2. IR-Fernbedienungssystem nach Anspruch 1, **dadurch gekennzeichnet, dass** auch das erste Signal ein IR-Signal ist, welches mindestens eine per IR-Signal ein-/ausschaltbare Steckdose ansteuert.

3. IR-Fernbedienungssystem nach Anspruch 1, **dadurch gekennzeichnet, dass** das erste Signal über ein Bussystem der ein-/ausschaltbaren Steckdose übermittelt wird.

4. IR-Fernbedienungssystem nach einem der vorstehenden Ansprüche, **dadurch gekennzeichnet, dass** das Installationsgerät (1, 35, 43 + 47) einen mit der Controllereinheit (2, 36) verbundenen IR-Empfänger (8, 39) aufweist, welcher IR-Signale einer IR-Hand-Fernbedienung (31, 32) eines Audiogeräts (20) oder Videogeräts (27) empfängt, worauf die Aktivierung dieses Gerätes (20, 27) mittels erstem/zweitem Signal erfolgt.

5. IR-Fernbedienungssystem nach einem der vorstehenden Ansprüche, **dadurch gekennzeichnet, dass** das als UP-Installationsgerät ausgebildete Installationsgerät (1, 47) einen Aktor (11, 54) aufweist, an welchen eine Last (14) angeschlossen ist und welcher mittels Bedieneinheit (4, 51) über die Controllereinheit (2, 36) ansteuerbar ist.

6. IR-Fernbedienungssystem nach einem der vorstehenden Ansprüche, **dadurch gekennzeichnet, dass** die Bedieneinheit (4, 51) mehrere Betätigungstasten (5, 6, 7, 52, 53) umfasst.

7. IR-Fernbedienungssystem nach einem der vorstehenden Ansprüche, **dadurch gekennzeichnet, dass** das Installationsgerät in Form eines Controlpanels (38, 43) ausgebildet ist, wobei als Bedieneinheit ein Touchscreen (38) vorgesehen ist.

8. IR-Fernbedienungssystem nach einem der vorstehenden Ansprüche, **dadurch gekennzeichnet, dass** das Installationsgerät aufgeteilt ist in ein Controlpanel (43) und mindestens ein UP-Installationsgerät (47), wobei in jedem Gerät eine Buseinheit (44, 48) vorgesehen ist, wobei beide Buseinheiten über ein Bussystem (45) miteinander verbunden sind und wobei das Controlpanel (43) die Controllereinheit (36), die Speichereinheit (37) und den IR-Empfänger (39) enthält, während das mindestens eine UP-Installationsgerät (47) den IR-Sender (49) aufweist.
